# EUROPÄISCHE PATENTSCHRIFT

(11) **EP 3 046 983 B1**
(45) Veröffentlichungstag und Bekanntmachung des Hinweises auf die Patenterteilung: **18.03.2020**
(21) Anmeldenummer: 15738244.1
(22) Anmeldetag: 29.05.2015
(51) Int. Cl.: C09K 3/14

(54) **MEHRSCHICHT-SCHLEIFPARTIKEL**
MULTILAYER GRINDING PARTICLE
PARTICULE ABRASIVE MULTICOUCHE

(30) Priorität: 18.06.2014 DE 102014108602
(43) Veröffentlichungstag der Anmeldung: 27.07.2016
(73) Patentinhaber: Klingspor AG, 35708 Haiger (DE)
(72) Erfinder: BOCK, Irene, 35683 Dillenburg (DE); KAMPS, Thomas, 59439 Holzwickede (DE)
(74) Vertreter: advotec.
(86) Internationale Anmeldenummer: PCT/DE2015/100214
(87) Internationale Veröffentlichungsnummer: WO 2015/192829

(56) Entgegenhaltungen:
- WO-A1-00/38886
- WO-A1-2014/020068
- WO-A1-2015/048768
- WO-A2-2013/003830
- JP-A- 2001 157 968
- US-A1- 2005 255 801
- US-A1- 2008 172 951
- US-A1- 2012 167 481
- US-A1- 2013 212 952
- US-A1- 2013 236 725

## Beschreibung

Die vorliegende Erfindung betrifft Mehrschicht-Schleifpartikel sowie Schleifmittel unter Verwendung der Schleifpartikel.

Gattungsgemäße Schleifpartikel bestehen beispielsweise aus keramischen Werkstoffen und werden mit einem Adhäsionsmittel auf einer Unterlage bzw. auf einem Substrat angeordnet, um so als Schleifmittel zur Bearbeitung bzw. zum Beschleifen eines Schleifguts verwendet zu werden.

Gattungsgemäße Schleifpartikel werden dabei beispielsweise in einem Extrusionsverfahren hergestellt. Alternativ können die Schleifpartikel auch durch ein Siebdruckverfahren hergestellt werden. Als Materialsystem für die Schleifpartikel kommen zum Beispiel Sol-Gel-Systeme in Frage, bei denen das Sol in einem dem Gelpunkt nicht zu entfernten Zustand extrudiert bzw. verdruckt wird und eine anschließende Härtung zum Schleifpartikel durch Übergang in den Gelzustand erfolgt. Bei keramischen Systemen kann zudem ein Härtungsschritt in Form eines Calcinierungsschritts vorgesehen sein, um die Schleifpartikel endgültig auszuhärten und die keramischen Eigenschaften des Materialsystems hervorzurufen.

Bei den gattungsgemäßen Schleifpartikeln besteht eine besondere Herausforderung darin, die Oberfläche und das Volumen der Schleifpartikel so auszugestalten, dass beim Schleifen, also während einer Abnutzung des Schleifpartikels, die Schleifleistung für das Schleifmittel bzw. im besten Fall für jedes einzelne Schleifpartikel möglichst weitgehend konstant bleibt. Die Schleifleistung wird dabei unter anderem durch die Fläche der Schleifpartikel bestimmt, die beim Schleifen mit dem Schleifgut in Kontakt kommt WO 2015/048768 offenbart ein Beispiel für gattungsgemäße Mehrschicht-Schleifpartikel.

Daher ist eine gezielte Beeinflussung der Oberflächenstruktur der Schleifpartikel, die zu einer möglichst beliebigen Oberfläche der Schleifpartikel führt, besonders wünschenswert, da eine gezielte Einstellung der Schleifleistung über die Oberfläche und die Veränderung der Oberfläche während des Schleifens erreicht wird.

Dementsprechend ist es Aufgabe der vorliegenden Erfindung, ein Schleifpartikel und ein Schleifmittel unter Verwendung von erfindungsgemäßen Schleifpartikeln vorzuschlagen, welche eine verbesserte Schleifleistung aufgrund einer Oberflächenmodifikation aufweisen.

Diese Aufgabe wird durch ein Mehrschicht-Schleifpartikel gemäß dem Oberbegriff des Anspruchs 1 gelöst. Weiter wird die erfindungsgemäße Aufgabe durch ein Schleifmittel gemäß dem Oberbegriff des Anspruchs 4 gelöst. Vorteilhafte Ausführungen der Erfindung sind Gegenstand der Unteransprüche.

Ausgangspunkt der erfinderischen Lehre sind Mehrschicht-Schleifpartikel, die eine Schichtstruktur von übereinander angeordneten Schichten aufweisen, wobei die jeweiligen Schichten parallel zu einer Ebene ausgebildet sind. Derartige Mehrschicht-Schleifpartikel können beispielsweise durch ein Mehrfach-Siebdruckverfahren hergestellt werden und sind im Hinblick auf die Oberflächengestaltung sowie im Hinblick auf die Volumengestaltung bereits deutlich vorteilhafter gegenüber anderen, beispielsweise extrudierten Schleifpartikeln oder Einschicht-Schleifpartikeln, so dass eine Verbesserung der Schleifleistung durch eine Verringerung der Oberfläche der Schleifpartikel, die mit dem Schleifgut in Kontakt kommt, sowie eine verbesserte Konstanz der Oberfläche, die während der Abnutzung des Schleifpartikels mit dem Schleifgut in Kontakt kommt, erreicht werden kann.

Nachteilig an diesen Mehrschicht-Schleifpartikeln ist jedoch, dass herstellungsbedingt die freien Oberflächen, also die nicht von anderen Schichten überdeckten Oberflächen der Schichten, im Wesentlichen rechtwinklig zueinander angeordnet sind und die die freien Oberflächen verbindenden Kanten der Schleifpartikel weitestgehend gerade ausgebildet sind. Eine derartige Schichtanordnung und die daraus resultierenden Oberflächen der Schleifpartikel mit den weitestgehend rechten Winkeln zwischen den freien Oberflächen der Schleifpartikel führen insgesamt zu einer Begrenzung der Schleifleistung.

Um die Schleifleistung der Schleifpartikel weiter zu verbessern, ist daher vorgesehen, dass die erfindungsgemäßen Mehrschicht-Schleifpartikel freie Oberflächen aufweisen, die sowohl im Bezug auf eine Ebene der Schichten als auch im Bezug auf eine auf der Ebene senkrecht stehende Ebene umfassend die Schichtstärkenrichtung zumindest teilweise konvex und/oder konkav ausgebildet sind.

Ebenfalls kann erfindungsgemäß vorgesehen sein, dass auch die Kanten der erfindungsgemäßen Schleifpartikel, die die freien Oberflächen der Schleifpartikel verbinden, zumindest abschnittsweise konvex und/oder konkav ausgebildet sind.

Durch die vorgeschlagene Veränderung der freien Oberflächen und/oder der Kanten der Schleifpartikel wird erreicht, dass die Oberfläche der erfindungsgemäßen Schleifpartikel verglichen mit den gattungsgemäßen Mehrschicht-Schleifpartikeln, die aus einer Vielzahl im Wesentlichen parallel zueinander angeordneten quader- bzw. plattenförmigen Schichten bestehen und deren freie Oberfläche im Ergebnis eine im Wesentlichen rechtwinklige Stufenstruktur ausbildet, deutlich mehr spitze bzw. kleine Winkel aufweist. Dabei ist das Vorsehen von spitzen Winkeln auf der Oberfläche der Schleifpartikel nur eine Möglichkeit, die Oberfläche, die im Ausgangszustand oder während der Abnutzung des Schleifpartikels mit einem Schleifgut in Kontakt kommt, positiv zu beeinflussen. Abhängig von der Grundgeometrie der Schleifpartikel können auch andere konvexe und/oder konkave Verformungen der freien Oberflächen zu einer optimierten Oberfläche führen.

Derartige erfindungsgemäße Schleifpartikel können beispielsweise erreicht werden, indem der Härtungsprozess für gattungsgemäße Mehrschicht-Schleifpartikel entsprechend geändert bzw. angepasst wird. In anderen Worten bedeutet dies, dass spezielle Temperaturverläufe bei der Aushärtung von gattungsgemäßen, beispielsweise gedruckten Mehrschicht-Schleifpartikeln in Abhängigkeit von dem jeweiligen Materialsystem gezielt zu den erfindungsgemäß im Hinblick auf die Ebene und die dazu senkrechte Ebene umfassend die Schichtstärkenrichtung konvex und/oder konkav verformten freien Oberflächen und/oder Kanten führen.

Besonders vorteilhaft ist es dabei, wenn die Mehrschicht-Schleifpartikel derart ausgestaltet sind, dass die Schichten einen Mantel bilden, der ein innen liegendes Hohlvolumen im Schleifpartikel umschließt. Durch eine derartige Kombination der konkav und/oder konvex gestalteten Kanten und Oberflächen zusammen mit einer Mantel-Hohlvolumen-Struktur kann die Schleifleistung der erfindungsgemäßen Schleifpartikel auch während deren Abnutzung im Rahmen des Schleifprozesses insgesamt auf einem besonders hohen Niveau gehalten werden, da neben einer Minimierung der Fläche, die mit dem Schleifgut zur Anlage kommt, diese Fläche während der Abnutzung des Schleifpartikels auch weitestgehend konstant ist.

Besonders vorteilhaft kann ebenfalls vorgesehen sein, dass die Mehrschicht-Schleifpartikel durch die erfindungsgemäße Verkrümmung der freien Oberflächen und/oder Kanten eine Kugelform annähern. Dies ist weiter besonders vorteilhaft, wenn die Kugel als Hohlkugel ausgebildet ist. Dies bedeutet, dass die Schleifpartikel auf den freien Oberflächen auf der Außenseite eines Mantels und gegebenenfalls auch auf der Innenseite eines Mantels bestehend aus den jeweiligen Schichten eine Kugelform annähern, so dass der Mantel eine Kugelschale bildet, die gegebenenfalls wiederum ein annähernd kugelförmiges Hohlvolumen umschließt.

Bei der vorgeschlagenen Kugelform der Mehrschicht-Schleifpartikel werden zwar keine Spitzen bzw. freien Oberflächen mit kleinen Winkeln erzeugt. Mehrschicht-Schleifpartikel in Form einer angenäherten Kugel bzw. in Form einer angenäherten Hohlkugel bieten sich jedoch ebenfalls als Schleifpartikel mit besonders hoher und besonders konstanter hoher Schleifleistung an, da gerade im Fall der Hohlkugel die mit dem Schleifgut zur Anlage kommende Oberfläche sowohl im ursprünglichen Zustand als auch im Zustand einer partiellen Abnutzung verhältnismäßig klein ist, was bei einem entsprechenden Druck auf das Schleifgut zu einer besonders hohen Schleifleistung führt.

Erfindungsgemäß sind weiterhin Schleifmittel vorgesehen, die Schleifpartikel gemäß den vorangehend beschriebenen Ausführungen umfassen. Dabei kann beispielsweise vorgesehen sein, dass auf einem Substrat Schleifpartikel durch ein Adhäsionsmittel befestigt sind.

Im Weiteren werden einzelne Ausgestaltungen der erfindungsgemäßen Lehre anhand lediglich schematischer Zeichnungen erläutert.

Es zeigt:
- **Fig. 1**: ein Mehrschicht-Schleifpartikel gemäß dem Stand der Technik; und
- **Fig. 2**: einen Schnitt durch ein erfindungsgemäßes Mehrschicht-Schleifpartikel gemäß einer ersten Ausführung.

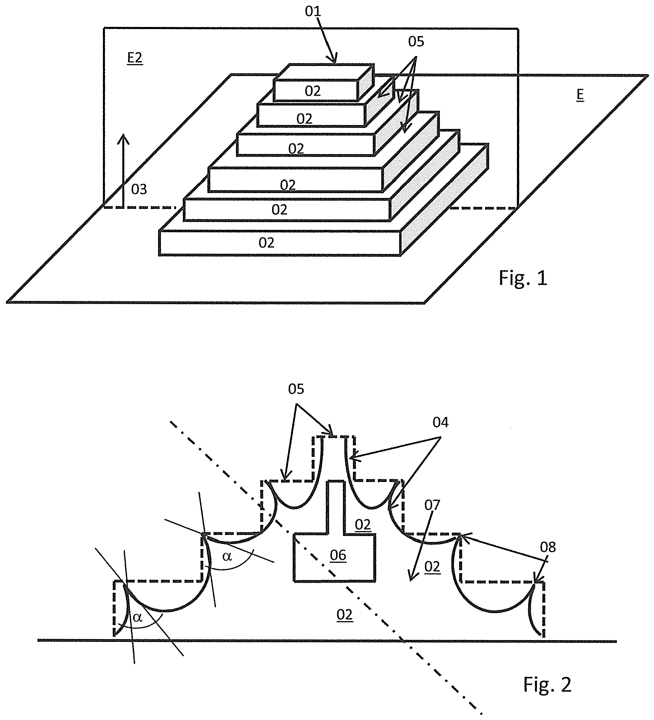

**Figur 1** zeigt ein Mehrschicht-Schleifpartikel 01, das aus einer Vielzahl von einzelnen Schichten 02 besteht. Das Mehrschicht-Schleifpartikel 01 kann beispielsweise im Rahmen eines mehrstufigen Siebdruckverfahrens hergestellt werden, bei dem im Rahmen eines jeweils einzelnen Druckschritts eine der Schichten 02 abgeschieden bzw. gedruckt wird. Das Drucken der untersten Schicht 02 kann beispielsweise auf einem Substratträger erfolgen, wodurch die Ebene E definiert wird, zu der die jeweiligen Schichten 02 parallel und im weitesten Sinne als Quader bzw. Platten ausgebildet sind. Wie aus der Figur 1 ersichtlich ist, resultiert daraus ein Mehrschicht-Schleifpartikel mit im Wesentlichen rechtwinklig zueinander angeordneten freien Oberflächen, die weitestgehend parallel zur Ebene E sowie senkrecht zu Ebenen sind, die die Schichtstärkenrichtung 03 umfassen und senkrecht auf der Ebene E stehen.

**Figur 2** zeigt beispielhaft einen Schnitt durch ein Mehrschicht-Schleifpartikel 01, der ebenfalls mehrere Schichten 02 umfasst. Die durchgezogenen Linien in der Darstellung des Mehrschicht-Schleifpartikels 01 der Figur 2 stellen dabei die erfindungsgemäß verformten freien Oberflächen 04 des Mehrschicht-Schleifpartikels 01 dar. Im Vergleich zu den erfindungsgemäßen Oberflächen 04 sind strichliniert in der Figur 2 auch die freien Oberflächen eines gattungsgemäßen Mehrschicht-Schleifpartikels 01, wie beispielsweise in der Figur 1 gezeigt, dargestellt. Des Weiteren ist in Figur 2 ein Hohlvolumen 06 dargestellt, welches von einem aus den Schichten 02 geformten Mantel 07 umschlossen wird. Wie aus der Darstellung der Figur 2 insbesondere durch Vergleich der strichlinierten Darstellung der weitestgehend rechtwinklig verlaufenden Stufenstruktur der freien Oberfläche 05 eines gattungsgemäßen Mehrschicht-Schleifpartikels mit den erfindungsgemäß verformten freien Oberflächen 04 des Schleifpartikels 01 deutlich erkennbar ist, sind die von der freien Oberfläche 04 gebildeten Übergänge zwischen den jeweiligen Schichten 02 im Vergleich zu den 90°-Winkeln der freien Oberfläche 05 mitunter durch deutlich kleinere Winkel α realisiert. Dadurch wird eine deutliche Erhöhung der Schleifleistung gewährleistet.

Ebenfalls erfindungsgemäß, jedoch in der Figur 2 aufgrund der Darstellung eines Schnitts durch das Mehrfach-Schleifpartikel 01 nicht ersichtlich, kann vorgesehen sein, dass auch die Kanten 08, welche die freien Oberflächen 04 der jeweiligen Schichten 02 miteinander verbinden, konvex und/oder konkav gekrümmt verlaufen, wodurch die Schleifleistung der Mehrschicht-Schleifpartikel weiter erhöht werden kann. Wie durch die strichpunktiert in der Figur 2 dargestellte Abnutzungsebene 09 veranschaulicht wird, führt das innerhalb des Mantels 07 liegende Hohlvolumen 06 dazu, dass die freie Oberfläche 04 bzw. die Oberfläche des Schleifpartikels, die während der Abnutzung des Schleifpartikels 01 mit dem Schleifgut in Kontakt kommt, nur in einem geringen Maße variiert, wodurch die insgesamt hohe Schleifleistung auch während der Abnutzung des Mehrschicht-Schleifpartikels 01 aufrechterhalten werden kann.

## Patentansprüche

1. Mehrschicht-Schleifpartikel (01) aufweisend eine Schichtstruktur von übereinander angeordneten Schichten (02), wobei die jeweiligen Schichten (02) parallel zu einer Ebene (E) ausgebildet sind
**dadurch gekennzeichnet,**
**dass** die nicht von einer anderen Schicht überdeckten freien Oberflächen (04) der Schichten (02) und/oder die die freien Oberflächen (04) verbindenden Kanten (08) zumindest teilweise konvex oder konkav bezüglich der Ebene (E) und/oder einer darauf senkrecht stehenden, die Schichtstärkerichtung (03) umfassenden Ebene (E2) verlaufen.

2. Mehrschicht-Schleifpartikel (01) nach Anspruch 1
**dadurch gekennzeichnet,**
**dass** die Schichten (02) einen Mantel (07) bilden, der ein Hohlvolumen (06) umschließt.

3. Mehrschicht-Schleifpartikel (01) nach Anspruch 1 oder 2
**dadurch gekennzeichnet,**
**dass** die Schichten (02) eine Kugelform annähern.

4. Schleifmittel,
**dadurch gekennzeichnet,**
**dass** es Mehrschicht-Schleifpartikel (01) gemäß einem der Ansprüche 1 bis 3 aufweist.

## Claims

1. A multilayer abrasive particle (01) having a layer structure of stacked layers (02), the respective layers (02) being formed parallel to a plane (E),
**characterized in that**
the exposed surfaces (04) of the layers (02) not covered by another layer and/or the edges (08) connecting the exposed surfaces (04) extend at least partially convexly or concavely in relation to the plane (E) and/or to a plane (E2) that is perpendicular thereto and comprises the direction (03) of the layer thickness.

2. The multilayer abrasive particle (01) according to claim 1,
**characterized in that**
the layers (02) form a shell (07) which encloses a hollow space (06).

3. The multilayer abrasive particle (01) according to claim 1 or 2,
**characterized in that**
the layers (02) approximate a spherical shape.

4. An abrasive,
**characterized in that**
the abrasive has multilayer abrasive particles (01) according to any one of claims 1 to 3.

## Revendications

1. Particule (01) abrasive multicouche ayant une structure de couche des couches (02) empilées, les couches (02) respectives étant formées parallèles à un plan (E),
**caractérisée en ce que**
les surfaces (04) exposées des couches (02) pas couvertes par une autre couche et/ou les bords (08) reliant les surfaces (04) exposées s'étendent de manière convexe ou concave au moins en partie par rapport au plan (E) et/ou à un plan (E2) qui est perpendiculaire à celui-ci et comprend la direction (03) de l'épaisseur de couche.

2. Particule (01) abrasive multicouche selon la revendication 1,
**caractérisée en ce que**
les couches (02) forment une enveloppe (07) qui enferme un espace (06) creux.

3. Particule (01) abrasive multicouche selon la revendication 1 ou 2,
**caractérisée en ce que**
les couches (02) approchent une forme sphérique.

4. Abrasif,
**caractérisé en ce que**
l'abrasif a des particules (01) abrasives multicouches selon l'une quelconque des revendications 1 à 3.
